# EUROPÄISCHE PATENTSCHRIFT

(11) **EP 3 131 799 B1**
(45) Veröffentlichungstag und Bekanntmachung des Hinweises auf die Patenterteilung: **27.06.2018**
(21) Anmeldenummer: 15713952.8
(22) Anmeldetag: 10.04.2015
(51) Int. Cl.: B60T 7/04, B60T 13/16

(54) **BETÄTIGUNGSEINHEIT FÜR EINE HYDRAULISCHE BREMSANLAGE**
ACTUATING UNIT FOR A HYDRAULIC BRAKE SYSTEM
UNITÉ D'ACTIONNEMENT D'UN SYSTÈME DE FREINAGE HYDRAULIQUE

(30) Priorität: 15.04.2014 DE 102014207219
(43) Veröffentlichungstag der Anmeldung: 22.02.2017
(73) Patentinhaber: Continental Teves AG & Co. oHG, 60488 Frankfurt (DE)
(72) Erfinder: DRUMM, Stefan, 55291 Saulheim (DE)
(86) Internationale Anmeldenummer: PCT/EP2015/057861
(87) Internationale Veröffentlichungsnummer: WO 2015/158626

(56) Entgegenhaltungen:
- DE-A1- 4 401 524
- DE-A1-102010 040 854
- US-A1- 2011 120 121

## Beschreibung

Die vorliegende Erfindung betrifft eine Betätigungseinheit für eine hydraulische Bremsanlage mit einem Betätigungspedal, wenigstens einem Arbeitskolben eines Hauptbremszylinders, mit einem in einem Verstärkergehäuse geführten Verstärkerkolben eines hydraulischen Bremskraftverstärkers zur Betätigung des Arbeitskolbens, mit einem Pedalanbindungselement zum Beaufschlagen des Verstärkerkolbens mit einer Betätigungskraft, einer elastisch deformierbaren Reaktionsscheibe, die auf einer Seite die Betätigungskraft sowie die Verstärkungskraft des Bremskraftverstärkers aufnimmt und auf der anderen Seite die Summe dieser Kräfte auf den Arbeitskolben abgibt, einer elektrisch steuerbaren Druckbereitstellungseinrichtung, deren Ausgangsdruck den Verstärkerkolben beaufschlagt, mit Mitteln zur Erfassung des Differenzweges des Pedalanbindungselementes und des Verstärkerkolbens, einer Sensoreinrichtung zur Erfassung des Differenzweges, sowie einer elektronischen Steuer- und Regeleinheit, die die von der Sensoreinrichtung abgegebenen Signale empfängt und zur Steuerung der Druckbereitstellungseinrichtung verwendet.

Eine derartige Betätigungseinheit ist beispielsweise aus der Patentanmeldung DE 43 10 061 A1 der Anmelderin bekannt. Der Erfassung des Differenzweges zwischen Pedalanbindungselement und des Verstärkerkolben dient eine lediglich vereinfacht dargestellte Sensoranordnung, die im Bereich zwischen dem Verstärkerkolben und einer am Betätigungspedal angelenkten Druckstange angeordnet ist. Zur Realisierung der Sensoranordnung können als Beispiel ein Hallsensor sowie ein Permanentmagnet verwendet werden. Weitere Angaben über den Aufbau der vorbekannten Sensoranordnung sind dem Offenbarungsgehalt der genannten Druckschrift nicht entnehmbar. So bleibt unter anderem offen, auf welchem Weg die Differenzweginformation von der vorbekannten, auf dem beweglichen Verstärkerkolben lokalisierten Sensoreinrichtung zu der Verstärkergehäusefesten elektronischen Steuer- und Regeleinheit gelangen sollen. Eine entsprechende, die Bewegung des Verstärkerkolbens nicht beeinträchtigende, flexible elektrische Verbindung wird als nicht mit der notwendigen Funktionssicherheit darstellbar angesehen.

Der daher zunächst naheliegende Ansatz, die beiden von Pedalanbindungselement und Verstärkerkolben relativ zum Verstärkergehäuse zurückgelegten Wege mit gehäusefesten Sensoranordnungen separat zu erfassen, die Differenz der entsprechenden Signale zu bilden und weiter zu verarbeiten, ist technisch problematisch, weil der die wesentliche Information tragende Differenzweg ca. zwei Größenordnungen kleiner ist als die beiden verwendeten Signale. Hat beispielsweise das Pedalanbindungselement-Wegsignal eine Abweichung von +1 % seines Wertebereichs und das Verstärkerkolben-Wegsignal eine Abweichung von -1 % seines Wertebereichs würde dies einen völlig unakzeptablen Fehler von 200 % des Differenzwegsignals verursachen. Eine Verfolgung dieses Ansatzes würde wegen der damit verbundenen Genauigkeitsanforderung an die beiden Signale zu einer vergleichsweise aufwändigen und kostenintensiven Lösung führen.

Es ist daher Aufgabe der vorliegenden Erfindung eine Betätigungseinheit der eingangs genannten Art derart zu verbessern, dass deren Mittel zur Erfassung des Differenzweges des Pedalanbindungselementes und des Verstärkerkolbens konstruktiv einfach, kostengünstig und dennoch funktionssicher realisierbar sind und dabei die für die Bremskraftverstärkungsfunktion notwendige Messgenauigkeit für den Differenzweg ermöglichen.

Diese Aufgabe wird erfindungsgemäß durch eine Betätigungseinheit gemäß Anspruch 1 gelöst, wonach die Mittel mindestens einen Ausleger umfassen, der die Information des Differenzweges zu einem von der Reaktionsscheibe radial und axial versetzten Ort in der Nähe der Sensoreinrichtung transportiert.

Zur Konkretisierung des Erfindungsgedankens sind zwei abschnittsweise parallel verlaufende Ausleger vorgesehen, die am Verstärkerkolben sowie am Pedalanbindungselement ausgebildet sind.

Durch die in den Unteransprüchen 2 bis 12 aufgezeigten Maßnahmen sind zweckmäßige Weiterbildungen der Erfindung angegeben, die im Zusammenhang mit den weiteren Merkmalen und Vorteilen der Erfindung nachfolgend anhand einer Zeichnung näher dargestellt und erläutert werden.

In der Zeichnung zeigen:
Fig. 1 ein vereinfachtes hydraulisches Schaltbild einer mit einer erfindungsgemäßen Betätigungseinheit ausgestatteten Bremsanlage für Kraftfahrzeuge,
Fig. 2 eine erste Ausführung einer erfindungsgemäßen Betätigungseinheit in einem Axialschnitt; und
Fig. 3 eine zweite Ausführung einer erfindungsgemäßen Betätigungseinheit in einer der Fig. 2 entsprechenden Schnittdarstellung.

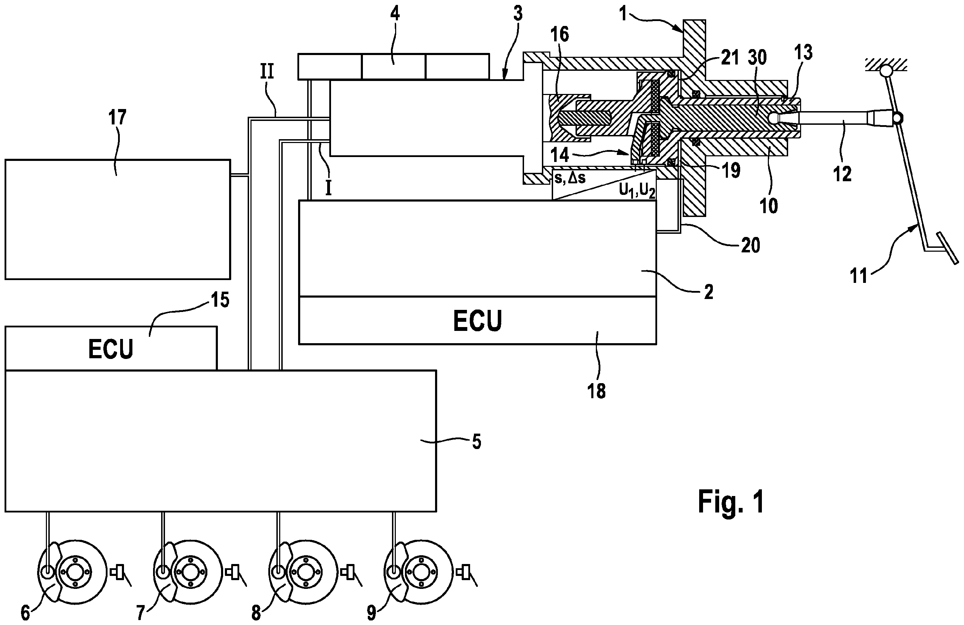

Das in Fig. 1 dargestellte Bremssystem besteht im Wesentlichen aus einer Betätigungseinheit 1, einer elektrisch steuerbaren Druckbereitstellungseinrichtung 2 mit einer zugeordneten elektronischen Steuer- und Regeleinheit 18, wobei die Betätigungseinheit 1 und die Druckbereitstellungseinrichtung 2 einen elektrohydraulischen Bremskraftverstärker bilden, sowie einem dem Bremskraftverstärker wirkungsmäßig nachgeschalteten Hauptbremszylinder bzw. Tandemhauptzylinder 3, dessen nicht gezeigte Druckräume mit den unter Atmosphärendruck stehenden Kammern eines Druckmittelvorratsbehälters 4 verbindbar sind. Andererseits sind an die Druckräume Radbremskreise I, II eines Kraftfahrzeuges angeschlossen, die unter Zwischenschaltung eines bekannten ABS- oder ESP-Hydroaggregats bzw. eines steuerbaren Radbremsdruckmodulationsmoduls 5 die Radbremsen 6, 7, 8, 9 des Kraftfahrzeuges mit hydraulischem Druckmittel versorgen. Dem Radbremsdruckmodulationsmodul 5 ist eine zweite elektronische Steuer- und Regeleinheit 15 zugeordnet. Die Betätigungseinrichtung 1, die in einem Verstärkergehäuse 10 angeordnet ist, an das der Tandemhauptzylinder 3 angeschlossen ist, ist über ein Bremspedal 11 ansteuerbar, das über eine Betätigungsstange 12 mit einem Verstärkerkolben 13 der Betätigungseinrichtung 1 wirkungsmäßig verbunden ist. Der Betätigungsweg des Bremspedals 11 wird mittels einer Sensoranordnung 14 erfasst, die u.a. den Weg des Verstärkerkolbens 13 relativ zum Verstärkergehäuse 10 sensiert. Die am Bremspedal 11 eingeleitete Betätigungskraft sowie die vom Bremskraftverstärker 1, 2 aufgebrachte Verstärkungskraft werden auf einen ersten Arbeitskolben 16 des Hauptbremszylinders 3 über Mittel übertragen, deren Ausbildung im nachfolgenden Text näher erläutert wird. Eine im Verstärkergehäuse 10 von einer am Verstärkerkolben 13 ausgebildeten ringförmigen Wirkfläche 21 begrenzte Verstärkerkammer 19 ist an die Druckbereitstellungseinrichtung 2 mittels einer hydraulischen Verbindungsleitung 20 angeschlossen. Für Rekuperationsbremsungen kann zur Darstellung des Bremspedalgefühls ein Druckmittelvolumenentnahmeaktuator verwendet werden, der mit dem Bezugszeichen 17 versehen ist.

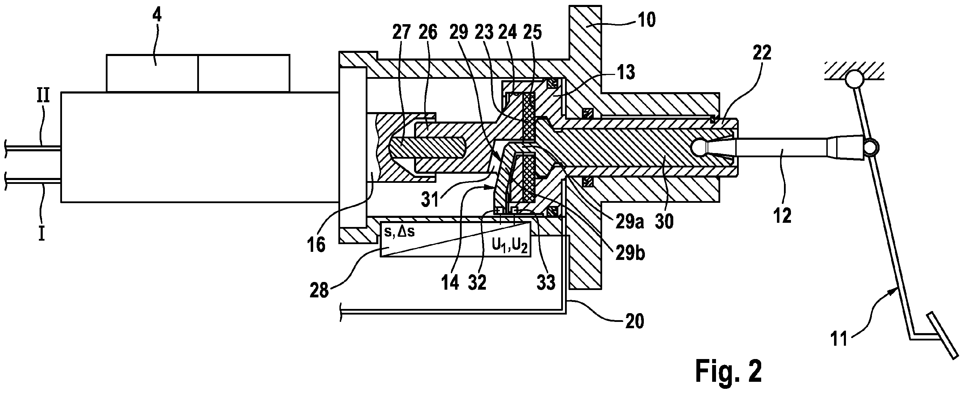

Wie insbesondere Fig. 2 zu entnehmen ist, wird die am Bremspedal 11 eingeleitete Betätigungskraft über die Druckstange 12 zunächst auf ein Pedalanbindungselement 30 übertragen, das in einer rohrförmigen axialen Verlängerung 22 des Verstärkerkolbens 13 geführt ist. Das Pedalanbindungselement 30 stützt sich an einer elastisch deformierbaren Reaktionsscheibe 23 axial ab, die in einer im Verstärkerkolben 13 ausgebildeten zylindrischen Ausnehmung 24 derart angeordnet ist, dass sie an einer die Ausnehmung 24 axial begrenzenden Ringfläche 25 axial anliegt. An der dem Bremspedal 11 abgewandten Seite der Reaktionsscheibe 23 wird in der erwähnten Ausnehmung 24 ein Arbeitskolbenbetätigungselement 26 geführt, das unter Zwischenschaltung eines Kraftübertragungsteiles 27 mit der Summe der pedalseitig auf die Reaktionsscheibe 23 wirkenden Kräfte den Arbeitskolben 16 des Hauptbremszylinders 3 betätigt.

Wie bereits vorstehend erwähnt wurde, sind Mittel zur Erfassung des Differenzweges des Pedalanbindungselementes 30 und des Verstärkerkolbens 13 vorgesehen, die mit einer lediglich schematisch angedeuteten Sensoreinrichtung 28 zusammenwirken und mit ihr zusammen die vorhin genannte Sensoranordnung 14 bilden. Die Mittel umfassen bei der ersten Ausführung der Erfindung gemäß Fig. 2 einen Ausleger 29, dessen erster Abschnitt 29a axial durch einen axialen Durchgang in der Reaktionsscheibe 23 hindurch geführt wird und an den ein zweiter Abschnitt 29b anschließt, der durch eine entsprechend ausgebildete Ausnehmung 31 im Arbeitskolbenbetätigungselement 26 verläuft und der die Weginformation des Pedalanbindungselementes 21 in radialer Richtung in die Nähe der Sensoreinrichtung 28 transportiert. Die Übertragung der Weginformation zwischen Auslegerabschnitt 29b und Sensoreinrichtung 28, die im gezeigten Ausführungsbeispiel am Verstärkergehäuse 10 angeordnet ist, erfolgt berührungslos, im gezeigten Ausführungsbeispiel auf magnetischem Wirkprinzip basierend. Zu diesem Zweck trägt der zweite Abschnitt 29b des Auslegers 29 an seinem Ende bzw. im Bereich der Sensoreinrichtung 28 wenigstens einen Magnetstein, der mit dem Bezugszeichen 32 versehen ist. Wenigstens ein weiterer Magnetstein 33 ist im Bereich der Sensoreinrichtung 28 im Verstärkerkolben 13 angeordnet. Dabei genügt jeweils ein Magnetstein, wenn sowohl der Verstärkerkolben 13 sowie das Pedalanbindungselement 30 gegen ein Verdrehen im Verstärkergehäuse 10 gesichert sind. Dadurch wird erreicht, dass im Bereich der Sensoreinrichtung 28 sehr wenig Magnetmaterial erforderlich ist. Für eine optimale Funktion des Bremskraftverstärkers 2, 13, 19 wird zusätzlich eine Absolutweg-Information benötigt, so dass die Sensoreinrichtung 28 auch den Absolutwert des vom Pedalanbindungselement 30 oder vom Verstärkerkolben 13 zurückgelegten Wegs erfasst. Alternativ ist es auch möglich, den Mittelwert aus diesen beiden Wegen zu erfassen.

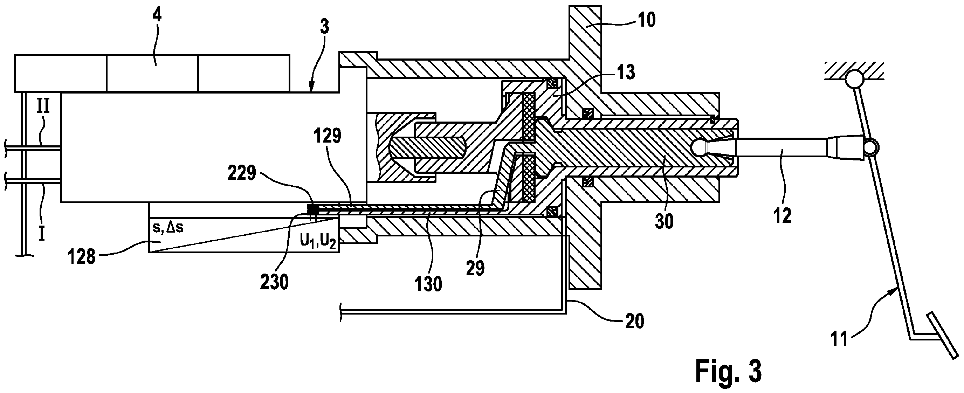

Bei der in Fig. 3 dargestellten zweiten Ausführung des Erfindungsgegenstandes ist die Sensoreinrichtung 128 in der Betätigungsrichtung hinter dem Verstärkergehäuse 10 des Bremskraftverstärkers außerhalb des Verstärkergehäuses 10 vorzugsweise parallel zum Hauptbremszylinder 3 angeordnet. Die oben erwähnten Mittel zum Übertragen der linearen Verstellweginformation an einen in der Nähe der Sensoreinrichtung 128 liegenden Ort sind durch zwei aus dem Verstärkergehäuse 10 heraus ragende Ausleger 129, 130 gebildet. Der erste, radial innen liegende Ausleger 129 ist am Pedalanbindungselement 30 angebracht und stellt eine axiale Verlängerung des im Zusammenhang mit Fig. 2 erläuterten Auslegers 29 dar, deren Ende mit einem ersten Magnetelement 229 bestückt ist. Der zweite, radial außen verlaufende Ausleger 130 wird durch eine axiale Verlängerung des Verstärkerkolbens 13 gebildet, deren Ende ein zweites Magnetelement 230 trägt. Der besondere Vorteil der in Fig. 3 dargestellten, vorzugsweise magnetischen Weginformationsübertragung besteht darin, dass sie nur eine kurze Übertragungsdistanz zu überwinden hat. Dementsprechend sind auch kleine Magnete ausreichend.

Alternativ zur magnetischen ist die Ausführungsvariante gemäß Fig. 3 auch für eine optische Weginformationsübertragung geeignet. Dazu werden anstelle der Magnetelemente 229, 230 optische Fenster verwendet, die von einer vorzugsweise in der Sensoreinrichtung 128 angeordneten Lichtquelle ausgesendete Lichtströme derart steuern, dass durch deren anschließenden Empfang in der Sensoreinrichtung 128 und eine Auswertung der Intensitäten von auf verschieden Wegen durchgelassenen Lichströmen zumindest der Relativweg des Pedalanbindungselements 30 zum Verstärkerkolben 13 ermittelt wird. Eine solche Wegerfassung auf Basis eines optischen Wirkprinzips kann im Gegensatz zum magnetischen Wirkprinzip nicht durch externe elektromagnetische Felder gestört werden.

## Patentansprüche

1. Betätigungseinheit (1) für eine hydraulische Bremsanlage mit einem Betätigungspedal (11), wenigstens einem Arbeitskolben (16) eines Hauptbremszylinders (3), mit einem in einem Verstärkergehäuse (10) geführten Verstärkerkolben (13) eines hydraulischen Bremskraftverstärkers zur Betätigung des Arbeitskolbens (16), mit einem Pedalanbindungselement (30) zum Beaufschlagen des Verstärkerkolbens (13) mit einer Betätigungskraft, einer elastisch deformierbaren Reaktionsscheibe (23), die auf einer Seite die Betätigungskraft sowie die Verstärkungskraft des Bremskraftverstärkers aufnimmt und auf der anderen Seite die Summe dieser Kräfte auf den Arbeitskolben (16) abgibt, einer elektrisch steuerbaren Druckbereitstellungseinrichtung (2), deren Ausgangsdruck den Verstärkerkolben (13) beaufschlagt, mit Mitteln (29, 129, 130) zur Erfassung des Differenzweges zwischen Pedalanbindungselement (30) und Verstärkerkolben (13), einer Sensoreinrichtung (28, 128) zur Erfassung des Differenzweges, sowie einer elektronischen Steuer- und Regeleinheit (18), die die von der Sensoreinrichtung (28, 128) abgegebenen Signale empfängt und zur Steuerung der Druckbereitstellungseinrichtung (2) verwendet, **dadurch gekennzeichnet, dass** die Mittel (29, 129, 130) mindestens einen Ausleger (29, 129, 130) umfassen, über den wenigstens eine Weginformation zur Erfassung des Differenzweges zu einem von der Reaktionsscheibe (23) radial und axial versetzten Ort in der Nähe der Sensoreinrichtung (28, 128) transportiert wird.

2. Betätigungseinheit nach Anspruch 1, **dadurch gekennzeichnet, dass** zwei abschnittsweise parallel verlaufende Ausleger (129, 130) vorgesehen sind, die am Pedalanbindungselement (30) sowie am Verstärkerkolben (13) ausgebildet sind.

3. Betätigungseinheit nach Anspruch 1 oder 2, **dadurch gekennzeichnet, dass** die Sensoreinrichtung (28, 128) dazu ausgebildet ist, die Differenzweginformation in hoher Auflösung zu erfassen.

4. Betätigungseinheit nach Anspruch 3, **dadurch gekennzeichnet, dass** die Sensoreinrichtung (28, 128) neben der Differenzweginformation auch einen Gesamtverschiebeweg erfasst, der durch den Weg des Pedalanbindungselements (30) oder des Verstärkerkolbens (13) oder deren Mittelwert repräsentiert wird.

5. Betätigungseinheit nach einem der Ansprüche 1 bis 4, **dadurch gekennzeichnet, dass** die Übertragung der Weginformationen vom Ort in der Nähe der Sensoreinrichtung (28, 128) zur Sensoreinrichtung (28, 128) berührungslos erfolgt.

6. Betätigungseinheit nach Anspruch 5, **dadurch gekennzeichnet, dass** die berührungslose Übertragung der Weginformation ein elektrisches, magnetisches oder optisches Wirkprinzip verwendet.

7. Betätigungseinheit nach einem der Ansprüche 1 bis 6, **dadurch gekennzeichnet, dass** die Sensoreinrichtung (128) parallel zum Hauptbremszylinder (3) angeordnet ist.

8. Betätigungseinheit nach einem der Ansprüche 1 bis 7, **dadurch gekennzeichnet, dass** die Sensoreinrichtung (128) in axialer Richtung hinter dem Verstärkergehäuse (10) angeordnet ist.

9. Betätigungseinheit nach einem der Ansprüche 1 bis 8, **dadurch gekennzeichnet, dass** der Ausleger (29) zur Übertragung der Weginformation des Pedalanbindungselementes (30) einen ersten Abschnitt (29a) umfasst, der die Reaktionsscheibe (23) axial durchdringt.

10. Betätigungseinheit nach Anspruch 9, **dadurch gekennzeichnet, dass** der Ausleger (29) einen zweiten Abschnitt (29b) umfasst, der die Weginformation in radialer Richtung transportiert.

11. Betätigungseinheit nach Anspruch 10, **dadurch gekennzeichnet, dass** die Übertragung der Summe der Kräfte auf den Arbeitskolben (16) mittels eines Arbeitskolbenbetätigungselements (26) erfolgt, wobei der zweite Abschnitt (29b) in einer Ausnehmung (31) des Arbeitskolbenbetätigungselements (26) verläuft.

12. Betätigungseinheit nach einem der vorangegangenen Ansprüche, **dadurch gekennzeichnet, dass** der Verstärkerkolben (13) relativ zum Verstärkergehäuse gegen ein Verdrehen gesichert ist.

13. Betätigungseinheit nach einem der vorangegangenen Ansprüche, **dadurch gekennzeichnet, dass** das Pedalanbindungselement (30) relativ zum Verstärkergehäuse oder zum Verstärkerkolben (13) gegen ein Verdrehen gesichert ist.

14. Betätigungseinheit nach Anspruch 12 oder 13, **dadurch gekennzeichnet, dass** wenigstens eine Verdrehsicherung als eine Führung eines Auslegers in axialer Richtung ausgebildet ist.

15. Betätigungseinheit nach Anspruch 14, **dadurch gekennzeichnet, dass** beide Verdrehsicherungen als Führungen von Auslegern in axialer Richtung ausgebildet sind.

## Claims

1. Actuating unit (1) for a hydraulic brake system having an actuating pedal (11), at least one operating piston (16) of a master brake cylinder (3), having a brake boosting piston (13) of a hydraulic braking force booster, said brake boosting piston being guided in a brake booster housing (10), so as to actuate the operating piston (16), having a pedal connecting element (30) for influencing the brake boosting piston (13) with an actuating force, a reaction disc (23) that can be deformed in an elastic manner, said reaction disc on one side receiving the actuating force and also the brake boosting force of the braking force booster and on the other side outputting the sum of these forces to the operating piston (16), an electrically controllable pressure providing device (2) whose output pressure influences the brake boosting piston (13), having means (29, 129, 130) for ascertaining the differential travel between the pedal connecting element (30) and the brake boosting piston (13), a sensor device (28, 128) for ascertaining the differential travel, and also an electronic control unit (18) that receives the signals that are output by the sensor device (28, 128) and uses said signals to control the pressure providing device (2), **characterized in that** the means (29, 129, 130) comprise at least one cantilever (29, 129, 130) by way of which the at least one travel information for ascertaining the differential travel is transported to a location near the sensor device (28, 128), said location being radially and axially offset from the reaction disc (23) .

2. Actuating unit according to Claim 1, **characterized in that** two cantilevers (129, 130) that extend in sections parallel to one another are provided, said cantilevers being embodied on the pedal connecting element (30) and also on the brake boosting piston (13) .

3. Actuating unit according to Claim 1 or 2, **characterized in that** the sensor device (28, 128) is embodied for the purpose of ascertaining the differential travel information in a high resolution.

4. Actuating unit according to Claim 3, **characterized in that** the sensor device (28, 128) in addition to the differential travel information also ascertains a total displacement travel that is represented by means of the travel of the pedal connecting element (30) or the brake boosting piston (13) or their mean value.

5. Actuating unit according to any one of the Claims 1 to 4, **characterized in that** the transfer of the travel information from the location near the sensor device (28, 128) to the sensor device (28, 128) is performed without making physical contact.

6. Actuating unit according to Claim 5, **characterized in that** the contact-free transfer of the travel information uses an electric, magnetic or optical operating principle.

7. Actuating unit according to any one of the Claims 1 to 6, **characterized in that** the sensor device (128) is arranged parallel to the master brake cylinder (3).

8. Actuating unit according to any one of the Claims 1 to 7, **characterized in that** the sensor device (128) is arranged in the axial direction behind the brake booster housing (10).

9. Actuating unit according to any one of the Claims 1 to 8, **characterized in that** the cantilever (29) for transferring the travel information of the pedal connecting element (30) comprises a first section (29a) that axially penetrates the reaction disc (23).

10. Actuating unit according to Claim 9, **characterized in that** the cantilever (29) comprises a second section (29b) that transports the travel information in a radial direction.

11. Actuating unit according to Claim 10, **characterized in that** the transfer of the sum of the forces on the operating piston (16) occurs by means of an operating piston actuating element (26), wherein the second section (29b) extends in a recess (31) of the operating piston actuating element (26).

12. Actuating unit according to any one of the preceding claims, **characterized in that** the brake boosting piston (13) is secured against rotation relative to the brake booster housing.

13. Actuating unit according to any one of the preceding claims, **characterized in that** the pedal connecting element (30) is secured against rotation relative to the brake booster housing or to the brake boosting piston (13).

14. Actuating unit according to Claim 12 or 13, **characterized in that** at least one anti-rotation device is embodied as a guiding arrangement of a cantilever in the axial direction.

15. Actuating unit according to Claim 14, **characterized in that** two anti-rotation devices are embodied as guiding arrangements of cantilevers in the axial direction.

## Revendications

1. Unité d'actionnement (1) pour un système de freinage hydraulique comprenant une pédale d'actionnement (11), au moins un piston de travail (16) d'un maître-cylindre de frein (3), comprenant un piston amplificateur (13) guidé dans un corps d'amplificateur (10) d'un servofrein hydraulique pour actionner le piston de travail (16), comprenant un élément d'attache de pédale (30) destiné à charger le piston amplificateur (13) avec une force d'actionnement, un disque de réaction (23) déformable par effet élastique, lequel absorbe d'un côté la force d'actionnement ainsi que la force d'amplification du servofrein et délivre de l'autre côté la somme de ces forces sur le piston de travail (16), un dispositif de fourniture de pression (2) commandable électriquement, dont la pression de sortie charge le piston amplificateur (13), comprenant des moyens (29, 129, 130) destinés à détecter la course différentielle entre l'élément d'attache de pédale (30) et le piston amplificateur (13), un dispositif capteur (28, 128) destiné à détecter la course différentielle ainsi qu'une unité de commande et de régulation (18) électronique qui reçoit les signaux délivrés par le dispositif capteur (28, 128) et les utilise pour commander le dispositif de fourniture de pression (2), **caractérisée en ce que** les moyens (29, 129, 130) comportent au moins un avant-bras (29, 129, 130) par le biais duquel l'au moins une information de course est transportée vers un endroit décalé dans le sens radial et axial du disque de réaction (23) à proximité du dispositif capteur (28, 128) en vue de détecter la course différentielle.

2. Unité d'actionnement selon la revendication 1, **caractérisée en ce que** deux avant-bras (129, 130) qui s'étendent en parallèle dans certaines portions sont présents, lesquels sont formés sur l'élément d'attache de pédale (30) ainsi que sur le piston amplificateur (13) .

3. Unité d'actionnement selon la revendication 1 ou 2, **caractérisée en ce que** le dispositif capteur (28, 128) est configuré pour détecter l'information de course différentielle avec une haute résolution.

4. Unité d'actionnement selon la revendication 3, **caractérisée en ce que** le dispositif capteur (28, 128), outre l'information de course différentielle, détecte également une course de translation totale qui est représentée par la course de l'élément d'attache de pédale (30) ou du piston amplificateur (13) ou sa valeur moyenne.

5. Unité d'actionnement selon l'une des revendications 1 à 4, **caractérisée en ce que** la transmission des informations de course depuis le lieu à proximité du dispositif capteur (28, 128) vers le dispositif capteur (28, 128) s'effectue sans contact.

6. Unité d'actionnement selon la revendication 5, **caractérisée en ce que** la transmission sans contact de l'information de course utilise un principe actif électrique, magnétique ou optique.

7. Unité d'actionnement selon l'une des revendications 1 à 6, **caractérisée en ce que** le dispositif capteur (128) est disposé en parallèle avec le maître-cylindre de frein (3).

8. Unité d'actionnement selon l'une des revendications 1 à 7, **caractérisée en ce que** le dispositif capteur (128) est disposé derrière le corps d'amplificateur (10) dans la direction axiale.

9. Unité d'actionnement selon l'une des revendications 1 à 8, **caractérisée en ce que** l'avant-bras (29) comporte, pour la transmission de l'information de course de l'élément d'attache de pédale (30), une première portion (29a) qui traverse le disque de réaction (23) dans le sens axial.

10. Unité d'actionnement selon la revendication 9, **caractérisée en ce que** l'avant-bras (29) comporte une deuxième portion (29b) qui transporte l'information de course dans le sens radial.

11. Unité d'actionnement selon la revendication 10, **caractérisée en ce que** la transmission de la somme des forces au piston de travail (16) s'effectue au moyen d'un élément d'actionnement de piston de travail (26), la deuxième portion (29b) passant dans un creux (31) de l'élément d'actionnement de piston de travail (26).

12. Unité d'actionnement selon l'une des revendications précédentes, **caractérisée en ce que** le piston amplificateur (13) est bloqué en torsion par rapport au corps d'amplificateur.

13. Unité d'actionnement selon l'une des revendications précédentes, **caractérisée en ce que** l'élément d'attache de pédale (30) est bloqué en torsion par rapport au corps d'amplificateur ou par rapport au piston amplificateur (13).

14. Unité d'actionnement selon la revendication 12 ou 13, **caractérisée en ce qu'**au moins un blocage anti-torsion est réalisé sous la forme d'un guide d'un avant-bras dans le sens axial.

15. Unité d'actionnement selon la revendication 14, **caractérisée en ce que** les deux blocages anti-torsion sont réalisés sous la forme de guides d'avant-bras dans le sens axial.
